(19) **Europäisches Patentamt / European Patent Office / Office européen des brevets**

(11) **EP 4 516 851 A1**

(12) **EUROPEAN PATENT APPLICATION**
published in accordance with Art. 153(4) EPC

(43) Date of publication:
**05.03.2025 Bulletin 2025/10**

(21) Application number: **23793990.5**

(22) Date of filing: **20.01.2023**

(51) International Patent Classification (IPC):
***C08L 23/00*** (2006.01)　　***C08L 21/00*** (2006.01)

(52) Cooperative Patent Classification (CPC):
**C08L 21/00; C08L 23/00;** Y02A 50/20

(86) International application number:
**PCT/JP2023/001677**

(87) International publication number:
**WO 2023/210076 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.04.2022　JP 2022072709**

(71) Applicant: **Inoac Corporation**
**Nagoya-shi, Aichi 450-0003 (JP)**

(72) Inventors:
• **ARAI Takahiro**
**Anjo-shi, Aichi 446-8504 (JP)**
• **TAKAMORI Yoshihisa**
**Anjo-shi, Aichi 446-8504 (JP)**

(74) Representative: **Berggren Oy**
**P.O. Box 16**
**Eteläinen Rautatiekatu 10A**
**00101 Helsinki (FI)**

(54) **RESIN COMPOSITION AND AUTOMOTIVE MEMBER**

(57)　This resin composition comprises: an olefin-based thermoplastic resin and/or a thermoplastic elastomer; a biomass-derived filler; and a chemical adsorbent for chemically adsorbing a volatile organic compound (VOC) emitted from the filler. The filler has an average particle diameter of preferably 1-500 $\mu$m. The content of the filler is preferably 0-60 mass%, excluding 0 mass%. The content of the chemical adsorbent is preferably 0.1-15 mass%. This automotive member includes the resin composition according to the present invention.

EP 4 516 851 A1

## Description

Technical Field

The present invention relates to a resin composition and an automotive member, and more particularly to a resin composition having a biomass-derived filler dispersed in an olefin-based thermoplastic resin and/or a thermoplastic elastomer, and an automotive member having the resin composition.

Background Art

Since olefin-based thermoplastic resins represented by polypropylene are excellent in, e.g., strength, impact resistance and heat resistance, they find various uses. In particular, filler-reinforced polypropylene (PPF) having a filler dispersed in polypropylene has high rigidity and excellent impact resistance. Because of this, PPF is favorably used as a material for automotive interior parts. A filler-reinforced plastics such as PPF are usually produced by molding a mixture of a resin and a filler at a high temperature.

In recent years, sustainable development has been desired for conserving the global environment. Also in filler-reinforced plastics, it is desired to utilize biomass resources not only for resins but also for fillers. Examples of the biomass-derived filler include scallop shells, eggshells, wood, pulp, bamboo, bagasse, and rice hulls. However, when a biomass-derived filler is kneaded together with a resin at a high temperature, odor is significantly generated from the biomass-derived filler (in particular, a cellulose-containing filler), sometimes deteriorating the working environment.

To solve this problem, various proposals have been made heretofore.

For example, Patent Literature 1 discloses a polypropylene resin composition containing a polypropylene resin (A) having a melting point of 150°C or more, a polypropylene resin (B) having a melting point of 110°C or more but less than 150°C, and a biomass material (C).

The Literature discloses that

(a) when the melting point of the polypropylene resin (B) is set to be less than 150°C, the temperature for molding the polypropylene resin composition can be considerably lowered, and
(b) as a result, generation of odor can be suppressed, and moldability and the quality of a product can be ensured.

Patent Literature 1 describes that when a filler-reinforced resin containing a biomass-derived filler is molded, generation of odor can be suppressed by lowering the molding temperature. However, it is difficult to completely suppress generation of odor just by lowering the molding temperature. Even after molding, odor components generate from a molded body, which may cause fogging.

Citation List

Patent Literature

Patent Literature 1: Japanese Patent Application Laid-Open No. 2021-050270

SUMMARY OF INVENTION

Technical problem

An object of the present invention is to suppress generation of odor and fogging due to the odor generation in a resin composition containing a biomass-derived filler.

Another object of the present invention is to provide an automotive member having such a resin composition.

Solution to Problem

In order to solve the above problems, a resin composition according to the present invention includes

an olefin-based thermoplastic resin and/or a thermoplastic elastomer,
a biomass-derived filler, and
a chemical adsorbent for chemically adsorbing a volatile organic compound (VOC) generated from the filler.

An automotive member according to the present invention has the resin composition according to the present invention.

Advantageous Effects of Invention

When a biomass-derived filler is dispersed in an olefin-based thermoplastic resin and/or a thermoplastic elastomer, if a chemical adsorbent is further added to a raw material, even if a volatile organic compound (VOC) is generated from the raw material heated or a molded body, the chemical adsorbent traps the VOC. As a result, generation of odor due to the VOC and fogging due to the VOC can be suppressed.

DESCRIPTION OF EMBODIMENTS

Hereinafter, an embodiment of the present invention will be described in detail.

[1. Resin Composition]

The resin composition according to the present invention

includes
an olefin-based thermoplastic resin and/or a thermoplastic elastomer,
a biomass-derived filler, and
a chemical adsorbent for chemically adsorbing a volatile organic compound (VOC) generated from the filler.

[1.1. Main Component]

[1.1.1. Olefin-based Thermoplastic Resin and Thermoplastic Elastomer]

The matrix of the resin composition is constituted of an olefin-based thermoplastic resin and/or a thermoplastic elastomer. The resin composition may contain either one or both of the olefin-based thermoplastic resin and the thermoplastic elastomer.

In the present invention, the types of olefin-based thermoplastic resin and thermoplastic elastomer are not particularly limited, and an optimal materials can be selected according to the purpose. Specific examples of the olefin-based thermoplastic resin and the thermoplastic elastomer are follows. The resin composition may contain either one of the following olefin-based thermoplastic resins and thermoplastic elastomers, singly or in combination of two types or more.

Further, each of the olefin-based thermoplastic resin and the thermoplastic elastomer shown below may be synthesized using a fossil fuel-derived olefin as a raw material, or may be synthesized using a biomass-derived olefin as a raw material.

[1.1.1.1. Specific Example of Olefin-based Thermoplastic Resin]

(A) Polyethylene resin:

Examples of the polyethylene resin include

(a) a high-density polyethylene,
(b) a linear low-density polyethylene, and
(c) a low-density polyethylene.

The linear low-density polyethylene is obtained by copolymerizing ethylene with a small amount of α-olefin. Examples of the α-olefin include propylene, 1-butene, 1-pentene, 4-methyl-1-pentene, 1-heptene, and 1-octene.

(B) Polypropylene resin:

Examples of the polypropylene resin include

(a) homo-polypropylene (H-PP),
(b) block polypropylene (B-PP) in which a compatibilizer (for example, ethylene propylene rubber (EPR)) is present at an interface between H-PP and polyethylene (PE), and

(c) propylene-α-olefin copolymer (R-PP).

Examples of the α-olefin constituting the propylene-α-olefin copolymer include ethylene, 1-butene, 1-pentene, 4-methyl -1 pentene, 1-hexene, 1-heptene, and 1-octene.

(C) Ethylene-vinyl acetate copolymer

The ethylene-vinyl acetate copolymer (EVA) is a copolymer of ethylene and vinyl acetate. The content of vinyl acetate in the EVA is usually 10 to 40 mass%.

[1.1.1.2. Specific Example of Thermoplastic Elastomer]

(D) olefin-based thermoplastic elastomer:

Examples of the olefin-based thermoplastic elastomer include

(a) copolymers of ethylene and an α-olefin having 3 to 20 carbon atoms,
(b) copolymers of ethylene, an α-olefin having 3 to 20 carbon atoms, and a cyclic olefin,
(c) ethylene-based copolymers using various vinyl compounds such as styrene, vinyl acetate, (meth)acrylic acid, and (meth)acrylic acid ester as a comonomer,
(d) copolymers of propylene and an α-olefin having 4 to 20 carbon atoms,
(e) copolymers of propylene, an α-olefin having 4 to 20 carbon atoms, and a cyclic olefin,
(f) propylene-based copolymers using various vinyl compounds such as styrene, vinyl acetate, (meth)acrylic acid, and (meth)acrylic acid ester as a comonomer, and
(g) a mixture of at least one selected from the group consisting of polyethylene and polypropylene and at least one selected from the group consisting of polybutadiene, hydrogenated polybutadiene, polyisoprene, hydrogenated polyisoprene, polyisobutylene, an ethylene-propylene copolymer, an ethylene-propylene-diene copolymer, an ethylene-butene copolymer, hydrogenated styrene butadiene, and an α-olefin copolymer.

When the olefin-based thermoplastic elastomer is a copolymer, the form of copolymerization may be either block copolymerization or graft copolymerization.
The olefin-based thermoplastic elastomer may be modified with at least one functional group selected from the group consisting of an acid anhydride group, a carboxyl group, an amino group, an imino group, an alkoxysilyl group, a silanol group, a silyl ether group, a hydroxyl group, and an epoxy group.

(E) Styrene-based thermoplastic elastomer:

The styrene-based thermoplastic elastomer is a block copolymer having a block of a styrene polymer or copolymer and a block of a polymer or copolymer of conjugated diene compound. Examples of the conjugated diene compound include isoprene and butadiene. Furthermore, the styrene-based thermoplastic elastomer may be hydrogenated at the double bond portion.
Examples of the styrene-based thermoplastic elastomer include

(a) a styrene-isoprene block copolymer,
(b) a styrene-isoprene-styrene block copolymer,
(c) a styrene-butadiene block copolymer,
(d) a styrene-butadiene-styrene block copolymer,
(e) a styrene-ethylene/butylene-styrene block copolymer (SEBS),
(f) a styrene-ethylene/propylene-styrene block copolymer (SEPS),
(g) a styrene-ethylene/butylene block copolymer (SEB),
(h) a styrene-ethylene/propylene block copolymer (SEP), and
(i) a styrene-ethylene/butylene-crystalline olefin block copolymer (SEBC).

(F) Vinyl chloride-based thermoplastic elastomer:

The vinyl chloride-based thermoplastic elastomer is an elastomer in which both the hard segment and the soft segment are made of polyvinyl chloride.

(G) Polyurethane-based thermoplastic elastomer:

The polyurethane-based thermoplastic elastomer is an elastomer in which the hard segment is made of polyurethane and the soft segment is made of, e.g., polyether, or polyester.

(H) Polyester-based thermoplastic elastomer:

The polyester-based thermoplastic elastomer is an elastomer in which the hard segment is made of polyester and the soft segment is made of polyether.

(I) Polyamide-based thermoplastic elastomer:

The polyamide-based thermoplastic elastomer is an elastomer in which the hard segment is made of polyamide and the soft segment is made of, e.g., polypropylene glycol (PPG) or polytetramethylene glycol (PTMG).

[1.1.2. Filler]

[A. Materials]

The filler is dispersed in a matrix composed of an olefin-based thermoplastic resin and/or a thermoplastic elastomer. In the present invention, the "filler" refers to a biomass-derived filler.

The filler is particularly preferably a cellulose-containing filler, in other words, a plant-derived (derived from lignocellulosic biomass or derived from cellulosic biomass) filler. Specific examples of the cellulose-containing filler include the following ones. The resin composition may contain any one or two or more of the following fillers.

Examples of the cellulose-based biomass-derived filler include:

(a) alpha fiber floc obtained by subjecting wood pulp to alkali treatment and mechanically shredding the pulp,
(b) cotton linter and cotton floc obtained from cotton seeds, and
(c) chopped artificial silk floc.

Examples of the filler derived from lignocellulosic biomass include

(a) wood pulp, refiner graphite pulp (RGP), paper pulp, and waste paper,
(b) crushed wood chips,
(c) wood flour made from crushed material, such as a ground stem of a tree of pine, fir, poplar, bamboo, bagasse, or oil palm, and from sawdust, and wood shavings,
(d) husk flour obtained by grounding the husk of a fruit such as walnut, peanut, and palm, and
(e) rice-husk powder.

Further, the filler may be derived from

(a) biomass of cellulose ester obtained by adding a polybasic acid anhydride to hydroxyl groups of cellulose constituting cellulosic biomass,
(b) biomass of esterified lignocellulose obtained by adding a polybasic acid anhydride to hydroxyl groups of lignocellulose constituting lignocellulosic biomass,
(c) biomass of oligoesterified cellulose obtained by adding a polybasic acid anhydride and a monoepoxy compound to hydroxyl groups of cellulose constituting cellulosic biomass,
(d) biomass of oligo-esterified lignocellulose obtained by adding a polybasic acid anhydride and a monoepoxy compound to hydroxyl groups of lignocellulose constituting lignocellulosic biomass,
(e) biomass of oligoesterified cellulose obtained by adding a polybasic acid anhydride and polyhydric alcohol to hydroxyl groups of cellulose constituting cellulosic biomass, or
(f) biomass of oligoesterified lignocellulose obtained by adding polybasic acid anhydride and polyhydric alcohol to hydroxyl groups of lignocellulose constituting lignocellulose biomass.

[B. Shape]

In the present invention, the shape of the filler is not particularly limited, and an optimum shape can be selected according to the purpose. Examples of the shape of the filler include a spherical shape, a needle shape, and a plate shape.

[C. Average Particle Diameter]

The "average particle diameter of a filler" refers to a median diameter ($D_{50}$) determined by a laser diffraction scattering method.

In the present invention, the average particle diameter of the filler is not particularly limited, and an optimum value can be selected according to the purpose.

In general, when the average particle diameter of the filler is too small, it may be difficult to uniformly disperse the filler. Therefore, the average particle diameter of the filler is preferably 1 $\mu$m or more. The average particle diameter is more preferably 5 $\mu$m or more, and still more preferably 10 $\mu$m or more.

In contrast, when the average particle diameter of the filler is too large, the mechanical properties of the resin composition may be deteriorated. Therefore, the average particle diameter of the filler is preferably 500 $\mu$m or less. The average particle diameter is more preferably 350 $\mu$m or less, and still more preferably 200 $\mu$m or less.

[1.1.3. Chemical Adsorbent]

The "chemical adsorbent" refers to a compound (additive) having reactivity capable of chemically adsorbing a volatile organic compound (VOC) mainly generated from a filler when a resin composition or a raw-material mixture for producing the composition is heated or irradiated with, e.g., light. Examples of the VOC include aldehydes, ketones, and carboxylic acids. Specific examples of the chemical adsorbent include the following ones. The resin composition may contain any one or two or more of the following chemical adsorbents.

(A) Chemical adsorbent composed of an organic compound having an amino group or an amide group:

Examples of the chemical adsorbent composed of an organic compound having an amino group include alkylamine, tetramethylenediamine, ethanolamine, and piperidine.

Examples of the chemical adsorbent composed of a compound having an amide group include 2-acrylamide-2 methylpropane sulfonic acid.

(B) Chemical adsorbent composed of a basic inorganic compound:

Examples of the chemical adsorbent composed of a basic inorganic compound include

(a) hydroxides such as sodium hydroxide, calcium hydroxide, potassium hydroxide, magnesium hydroxide, and iron hydroxide,
(b) basic oxides such as sodium oxide, magnesium oxide, and calcium oxide, and
(c) carbonates or hydrogen carbonates such as sodium carbonate, sodium hydrogen carbonate, and calcium carbonate.

Of them, calcium oxide is suitable as a chemical adsorbent because it is excellent in adsorption effect of VOC and glass fogging components. For example, when an aldehyde is oxidized to a carboxylic acid by application of, e.g., heat or light, the carboxylic acid is immediately adsorbed by calcium oxide. The calcium oxide may be derived from a mineral or a biological material (for example, a baked product of a scallop shell or an egg shell).

Among the fillers, wood flour is highly hygroscopic. Thus, when the wood flour heated, fat and oil is easily decomposed and higher fatty acids are released. As a result, it is considered that a fat and oil degradation product volatilizes. Whereas, if calcium oxide is further added to a resin composition containing wood flour as a filler, the calcium oxide chemically adsorbs the fat and oil degradation product. As a result, it is considered that odor and fogging of glass are suppressed.

A chemical adsorbent may be added directly to a resin composition. Alternatively, a chemical adsorbent may be supported on the surface of the inorganic porous body and added to the resin composition.

The inorganic porous body is not particularly limited as long as it is an inorganic compound having a large number of pores in the surface thereof. Examples of the material for the inorganic porous body include zeolite, silicon dioxide, activated carbon, titania, calcium phosphate, alumina, aluminum hydroxide, and magnesium hydroxide. Examples of the shape of the inorganic porous body include a spherical shape, a rod shape, and an elliptical shape.

[1.2. Subcomponent]

The resin composition according to the present invention may be composed only of a main component as mentioned above and unavoidable impurities, or may contain various subcomponents in addition to these. Specific examples of the subcomponent include the following ones.

[1.2.1. Compatibilizer]

The resin composition according to the present invention may contain a compatibilizer.

The "compatibilizer" refers to an additive for compatibilizing an olefin-based thermoplastic resin and/or a thermoplastic elastomer and a filler. In the present invention, the compatibilizer is not particularly limited as long as it exhibits such a function. Specific examples of the compatibilizer include the following ones. The resin composition may contain any one or two or more of these compatibilizers.

(A) Saturated carboxylic acid based compatibilizer:

Examples of the saturated carboxylic acid based compatibilizer include saturated carboxylic acids and derivatives thereof.

Examples of the saturated carboxylic acid include succinic anhydride, succinic acid, phthalic anhydride, phthalic acid, tetrahydrophthalic anhydride, and adipic anhydride.

Examples of derivatives of saturated carboxylic acids include metal salts, amides, imides, and esters of saturated carboxylic acids.

(B) Unsaturated carboxylic acid based compatibilizer:

Examples of the unsaturated carboxylic acid based compatibilizer include unsaturated carboxylic acids, derivatives thereof, and olefin-based thermoplastic resins modified with an unsaturated carboxylic acid or a derivative thereof.

Examples of the unsaturated carboxylic acid include maleic anhydride, maleic acid, nadic anhydride, itaconic anhydride, itaconic acid, citraconic anhydride, citraconic acid, crotonic acid, isocrotonic acid, mesaconic acid, angelic acid, sorbic acid, and acrylic acid.

Examples of the derivatives of an unsaturated carboxylic acid include metal salts, amides, imides, and esters of unsaturated carboxylic acids.

[1.2.2. Antioxidant]

The resin composition according to the present invention may contain an antioxidant.

The "antioxidant" refers to an additive for suppressing oxidation of a resin composition by a radical. Examples of the antioxidant include a phenol-based antioxidant having a function of trapping a radical, and a phosphorus-based antioxidant having a function of decomposing hydrogen peroxide. The resin composition according to the present invention may contain any one or two or more of these antioxidants.

[1.2.3. Weathering Stabilizer]

The resin composition according to the present invention may contain a weathering stabilizer.

The "weathering stabilizer" refers to an additive for suppressing deterioration of a resin composition due to an outdoor natural environment such as sunlight, temperature, humidity, and rain. Examples of the weathering stabilizer include an ultraviolet absorber for absorbing ultraviolet rays and a light stabilizer for stabilizing radicals generated by ultraviolet rays. The resin composition according to the present invention may contain any one or two or more of these weathering stabilizers.

[1.2.4. Other subcomponents]

The resin composition according to the present invention may further contain subcomponents other than the above ones.

Examples of other subcomponents include a nucleating agent, a heat resistant stabilizer, an antistatic agent, a slipping agent, an anti-blocking agent, an antifogging agent, a neutralizing agent, a metal deactivator, a surfactant, a colorant, an antimicrobial/antifungal agent, a flame retardant, a plasticizer, a dispersant, a bulking agent, a foaming agent, a crosslinking agent, a conductive agent, an antiseptic agent, a fragrance, a deodorant, and an antifungal agent. The resin composition may further contain any one or two or more of these subcomponents.

[1.3. Composition]

[1.3.1. Filler Content]

The resin composition according to the present invention preferably satisfies the following equation (1).

$$0 < X \leq 60 \text{ mass}\% \qquad (1)$$

wherein X (mass%) is a mass ratio of the filler with respect to a total mass of the resin composition.

In general, when X is too small, mechanical properties may deteriorate. Therefore, X is preferably beyond 0. X is more preferably 5 mass% or more, and still more preferably 10 mass% or more.

In contrast, if X is too large, it may be difficult to uniformly disperse the filler in the olefin-based thermoplastic resin and/or thermoplastic elastomer. Therefore, X is preferably 60 mass% or less. X is more preferably 50% or less, 40% or less, or 30% or less.

[1.3.2. Content of Chemical Adsorbent]

The resin composition according to the present invention preferably satisfies the following equation (2).

$$0.1 \leq Y \leq 15 \text{ mass}\% \qquad (2)$$

wherein Y (mass%) is a mass ratio of the chemical adsorbent with respect to a total mass of the resin composition.

When Y is too small, it may be difficult to suppress generation of odor and fogging. Therefore, Y is preferably 0.1 mass% or more. Y is more preferably 0.3 mass% or more, 0.5 mass% or more, or 1.0 mass% or more.

In contrast, when Y is too large, not only the effect of a chemical adsorbent is saturated, but also mechanical properties thereof may deteriorate. Therefore, Y is preferably 15 mass% or less. Y is more preferably 10 mass% or less, 9 mass% or less, 8 mass% or less, 7 mass% or less, 6 mass% or less, 5 mass% or less, 4 mass% or less, or 3 mass% or less.

[1.3.2. Content of Subcomponent]

The resin composition according to the present invention may contain a filler and a chemical adsorbent, and the balance which may be constituted of an olefin-based thermoplastic resin and/or a thermoplastic elastomer and unavoidable impurities. Alternatively, the resin composition according to the present invention may contain a filler, a chemical adsorbent, and one or more subcomponents, and the balance which may be constituted of an olefin-based thermoplastic resin and/or a thermoplastic elastomer, and unavoidable impurities.

When the resin composition contains a subcomponent, the content of the subcomponent is not particularly limited, and an optimum content can be selected according to the purpose.

[1.4. Application]

The resin composition according to the present invention can be used for various applications. Examples of the use of the resin composition according to the present invention include

(a) automotive members,
(b) pellets serving as a raw material for producing an injection-molded body, and
(c) masterbatch having a filler dispersed in high concentration.

Examples of the automotive members having the resin composition according to the present invention include

(a-1) interior members such as an instrument panel, a trim, a deck board, a pillar, and an engine cover,
(a-2) exterior members such as bumper, molding, fender, spats, weather strip, glass run, and wiper.

[2. Method for Producing Resin Composition]

The resin composition according to the present invention is obtained by

(a) blending a main component so as to satisfy a predetermined ratio, and, if necessary, a subcomponent, and

(b) kneading the raw-material mixture while heating at a predetermined temperature to mold a kneaded product into a predetermined shape.

The heating temperature of the raw material is not particularly limited, and an optimum temperature can be selected according to the purpose. In general, the higher the heating temperature, the easier the filler is uniformly dispersed. However, when the heating temperature is too high, a resin is discolored, or a volatile organic compound (VOC) is easily generated from the filler. In order to suppress discoloration of the resin and generation of VOC, the heating temperature is preferably 200°C or less.

[3. Action]

When a biomass-derived filler is dispersed in an olefin-based thermoplastic resin and/or a thermoplastic elastomer, if a chemical adsorbent is further added to a raw material, even if a volatile organic compound (VOC) is generated from the raw material heated or a molded body, the chemical adsorbent traps the VOC. As a result, generation of odor due to the VOC and fogging due to the VOC can be suppressed.

Examples

(Examples 1 to 5, Comparative Examples 1 to 3, Reference Examples 1 to 3)

[1. Preparation of Sample]

Raw materials shown in Table 1 were blended in the ratios shown in Table 1 to obtain a raw-material mixture. The raw-material mixture was melt-kneaded by a twin-screw extruder to prepare pellets. The molding temperature was 170°C.
Subsequently, the pellets were put into an injection molding machine, and injection molding was performed to obtain a test-piece material. The injection-molding temperature was 180°C. Test pieces having a predetermined size were cut out from the obtained test-piece material, and subjected to various tests.
Note that block polypropylene (B-PP) (BC04ASW manufactured by Japan Polypropylene Corporation) was used as the olefin-based thermoplastic resin, and ethylene octene rubber (EOR) (ENGAGE8180 manufactured by Dow Chemical Japan Co., Ltd.) was used as the thermoplastic elastomer.
The filler that was used was

(a) wood flour having an average particle diameter: 70 to 150 $\mu$m (Examples 1 and 2, Comparative Examples 1 to 3) (ARBOCEL C-100, manufactured by Rettenmaier Japan Co., Ltd.),
(b) wood flour having an average particle diameter of 20 to 40 $\mu$m (Examples 3 to 5) (ARBOCEL CW630PU manufactured by Rettenmaier Japan Co., Ltd.), or
(c) talc (Reference Example 1) (SK-7800 manufactured by Haicheng Chemical Co., Ltd.).

Maleic anhydride-based modified polypropylene (PRIEX 20097 manufactured by BYK Japan KK) was used as a compatibilizer.
The chemical adsorbent that was used was

(a) a CaO-based chemical adsorbent (BYK-MAX OR 4206 manufactured by BYK Japan KK, CaO content: 10 to 20%),
(b) a CaO-based chemical adsorbent (RECYCLOBYK 4371 manufactured by BYK Japan KK, CaO content: 30 to 40%), or
(c) an amine-based chemical adsorbent (H-6000HS manufactured by Otsuka Chemical Co., Ltd.).

Further, other additives that were used were,

(a) a phenolic antioxidant (AO-60 manufactured by ADEKA CORPORATION),
(b) a phosphorus-based antioxidant (2112 manufactured by ADEKA CORPORATION), and
(c) a weathering stabilizer (XT-855 manufactured by BASF SE).

[Table 1]

| Type of material | | Reference Example 1 | Reference Example 2 | Reference Example 3 | Comparative Example 1 | Comparative Example 2 | Comparative Example 3 | Example 1 | Example 2 | Example 3 | Example 4 | Example 5 |
|---|---|---|---|---|---|---|---|---|---|---|---|---|
| Type of material | | Blend ratio (mass%) | | | | | | | | | | |
| Olefin-based thermoplastic resin | Block polypropylene | 69.7 | 89.7 | 79.7 | 69.7 | 64.7 | 54.7 | 51.7 | 51.7 | 44.7 | 20.7 | 43.7 |
| Thermoplastic elastomer | Ethylene octene rubber | 10 | 10 | 20 | 10 | 10 | 20 | 20 | 20 | 15 | 20 | 15 |
| Filler (a) | Wood flour (lignocellulose) | 0 | 0 | 0 | 20 | 20 | 20 | 20 | 20 | 0 | 0 | 0 |
| Filler (b) | Wood flour (lignocellulose) | 0 | 0 | 0 | 0 | 0 | 0 | 0 | 0 | 30 | 45 | 30 |
| Filler (c) | Talc | 20 | 0 | 0 | 0 | 0 | 0 | 0 | 0 | 0 | 0 | 0 |
| Compatibilizer | Maleic anhydride-based modified polypropylene | 0 | 0 | 0 | 0 | 5 | 5 | 5 | 5 | 5 | 5 | 5 |
| Chemical adsorbent (a) | Cao-base | 0 | 0 | 0 | 0 | 0 | 0 | 3 | 0 | 0 | 0 | 0 |
| Chemical adsorbent (b) | Cao-base | 0 | 0 | 0 | 0 | 0 | 0 | 0 | 3 | 5 | 8 | 5 |
| Chemical adsorbent (c) | Amine-base | 0 | 0 | 0 | 0 | 0 | 0 | 0 | 0 | 0 | 1 | 1 |
| Antioxidant (a) | Phenol-base | 0.1 | 0.1 | 0.1 | 0.1 | 0.1 | 0.1 | 0.1 | 0.1 | 0.1 | 0.1 | 0.1 |
| Antioxidant (b) | Phosphorus-base | 0.1 | 0.1 | 0.1 | 0.1 | 0.1 | 0.1 | 0.1 | 0.1 | 0.1 | 0.1 | 0.1 |
| Weathering stabilizer | | 0.1 | 0.1 | 0.1 | 0.1 | 0.1 | 0.1 | 0.1 | 0.1 | 0.1 | 0.1 | 0.1 |
| Total (mass%) | | 100 | 100 | 100 | 100 | 100 | 100 | 100 | 100 | 100 | 100 | 100 |

[2. Test method]

[2.1. Mechanical Properties]

[2.1.1. Specific Gravity]

The specific gravity of the test pieces was measured in accordance with JIS K 7112.

[2.1.2. Flexural Strength]

Flexural strength and elastic modulus were measured in accordance with ISO 178.

The flexural strength is preferably 20 MPa or more. The flexural strength is more preferably 23 MPa or more, and still more preferably 25 MPa or more. The upper limit of the flexural strength is not particularly limited, but is usually 80 MPa or less.

The flexural modulus is preferably 1000 MPa or more. The flexural modulus is more preferably 1200 MPa or more, and still more preferably 1400 MPa or more. The upper limit of the flexural modulus is not particularly limited, but is usually 8000 MPa or less.

[2.1.3. Impact Value]

The Charpy impact test was performed according to ISO 179/1eA. The test conditions were 23°C notched or -30°C notched.

The impact value at 23°C is preferably 2.0 kJ/m$^2$ or more. The impact value at 23°C is more preferably 3.0 kJ/m$^2$ or more, and still more preferably 5.0 kJ/m$^2$ or more. The larger the impact value at 23°C, the better.

The impact value at -30°C is preferably 1.2 kJ/m$^2$ or more. The impact value at -30°C is more preferably 1.5 kJ/m$^2$ or more, and still more preferably 2.0 kJ/m$^2$ or more. The larger the impact value at -30°C, the better.

[2.1.4. Deflection Temperature Under Load (HDT)]

The deflection temperature under load (HDT) was measured in accordance with ISO 75-2. The flexural stress (load) was 0.45 MPa.

HDT is preferably 90°C or more. HDT is more preferably 100°C or more, and still more preferably 110°C or more. The upper limit of HDT is not particularly limited, but it is usually 200°C or less.

[2.2. Odor Property]

[2.2.1. VOC]

The measurement of volatile organic compounds (VOC) was carried out under room conditions, i.e., a temperature of 23 $\pm$ 2°C and a humidity of 50 $\pm$ 5% RH. Analysis was performed within 14 days after preparation of a test piece.

A 10 L-Tedlar (registered trademark) bag was filled with pure nitrogen gas three times to replace the gas of the bag. A test piece (100 mm $\times$ 80 mm $\times$ t2mm) was put in a bag and sealed airtight. After the bag was heated at 65°C for 2 hours by a hot air dryer, volatile components in the bag were adsorbed onto silica gel. Furthermore, the volatile components adsorbed onto silica gel was extracted with a solvent and analyzed by high performance liquid chromatography (HPLC). The total amount of volatile components (aldehydes) was measured by comparison with a standard sample.

When the VOC is HCHO, the amount of volatilization is preferably 1.0 $\mu$g/piece or less. The amount of volatilization is more preferably 0.5 $\mu$g/piece or less, and still more preferably 0.1 $\mu$g/piece or less. The smaller the amount of volatilization of HCHO, the better.

When the VOC is CH$_3$CHO, the amount of volatilization is preferably 1.6 $\mu$g/piece or less. The amount of volatilization is more preferably 1.0 $\mu$g/piece or less, and still more preferably 0.5 $\mu$g/piece or less. The smaller the amount of volatilization of CH$_3$CHO, the better.

[2.2.2. Glass Haze (fogging)]

The measurement of glass haziness was carried out under room-temperature conditions, i.e., a temperature of 23°C $\pm$ 2°C and a humidity of 50 $\pm$ 5% RH. Analysis was performed within 14 days after preparation of a test piece.

A glass plate of 47 mm square × t3 mm (glass haze level ≤ 0.5%) was used. Test pieces (in total, 2 pieces of 100 mm × 25 mm × t2 mm) were placed in a glass bottle, and the glass bottle was covered with a glass plate. In this state, the glass bottle was heated at 80 ± 2°C for 20 hours in an oil bath. One hour after completion of the test, the glass haze level (%) of the glass plate was measured with an integrating sphere light transmittance measuring device.

The degree of grass haziness is preferably 5% or less. The glass haziness is more preferably 3% or less, and still more preferably 1.5% or less. The smaller the glass haze, the better.

[3. Results]

[3.1. Mechanical Properties]

Table 2 shows the results. The followings are found from Table 2.

(1) In Reference Example 1, both mechanical properties and odor property were good, but the specific gravity was beyond 1.0. This is considered because talc is used as the filler.

(2) In Reference Examples 2 and 3, the odor property were good, but the elastic modulus was less than 1400 MPa, and the deflection temperature under load was also as low as less than 100°C. This is considered because no filler is contained. Further, in Reference Example 3, the flexural strength was as low as less than 25 MPa. This is considered because the amount of elastomer was increased.

(3) In Comparative Example 1, the flexural strength was 25 MPa or more, the elastic modulus was 1400 MPa or more, and the impact value at -30°C was 2.0 kJ/m$^2$ or more. However, in Comparative Example 1, the impact value at room temperature was as low as less than 5 kJ/m$^2$. This is considered because the filler was not uniformly dispersed due to no content of the compatibilizer.

In Comparative Example 1, the amount of volatilization of $CH_3CHO$ was beyond 1.60 μg/piece, and the glass haze level was beyond 5%. This is considered because the chemical adsorbent is not contained.

(4) Comparative Examples 2 and 3 exhibited good mechanical properties since a filler and a compatibilizer are contained. However, in Comparative Examples 2 and 3, the odor property deteriorated. In particular, in Comparative Example 2, the volatile amount of HCHO was beyond 1.00 μg/piece. This is considered because the chemical adsorbent is not contained.

(5) The components attached to the glass plate during the glass haziness test of Comparative Examples 1 to 3 were analyzed with a Fourier transform infrared spectrophotometer (FT-IR). As a result, it was found that the glass haziness of Comparative Examples 1 to 3 was originated primarily from a fatty acid ester.

(6) In Examples 1 to 5, both mechanical properties and odor property were good. However, in Examples 3 to 5, the specific gravity was beyond 1.0. This is because the content of wood flour is large.

(7) As the CaO content increased, the quantity of $CH_3CHO$ generation tended to be suppressed. When a CaO-based chemical adsorbent and an amine-based chemical adsorbent were used in combination, the quantity of $CH_3CHO$ generation tended to be further suppressed.

[Table 2]

| Item | Subitem | Unit | Reference Example 1 | Reference Example 2 | Reference Example 3 | Comparative Example 1 | Comparative Example 2 | Comparative Example 3 | Example 1 | Example 2 | Example 3 | Example 4 | Example 5 |
|---|---|---|---|---|---|---|---|---|---|---|---|---|---|
| Specific gravity JIS K 7112 | - | - | 1.06 | 0.90 | 0.90 | 0.98 | 0.98 | 0.98 | 0.98 | 0.98 | 1.04 | 1.13 | 1.04 |
| Flexural test ISO 178 | Strength | MPa | 32 | 29 | 24 | 33 | 39 | 29 | 27 | 27 | 31 | 27 | 30 |
| | Flexural modulus | MPa | 2050 | 1140 | 950 | 2010 | 1980 | 1540 | 1480 | 1480 | 1730 | 1820 | 1690 |
| Charpy impact ISO 179/1eA | 23°C notched | kJ/m$^2$ | 13.7 | 15.7 | 61 | 4.9 | 6.5 | 13.5 | 11.8 | 11.4 | 6.0 | 5.4 | 6.1 |
| | -30°C notched | kJ/m$^2$ | 2.8 | 6.7 | 10 | 2.4 | 2.6 | 4.2 | 3.4 | 3.1 | 2.4 | 2.2 | 2.4 |
| HDT ISO 75-2 | Flexural stress: 0.45 Mpa | °C | 113 | 91 | 83 | 127 | 130 | 119 | 114 | 116 | 111 | 116 | 112 |
| VOC | HCHO | µg/piece | 0.16 | 0.02 | 0.04 | 0.84 | 1.28 | 0.82 | < 0.02 | 0.04 | < 0.02 | 0.08 | < 0.02 |
| | CH3CHO | µg/piece | 0.14 | 0.03 | 0.03 | 1.61 | 1.62 | 1.64 | 1.49 | 0.34 | 0.56 | 0.94 | 0.04 |
| Glass haziness | | % | 0.3 | 0.2 | 0.2 | 12.4 | 9.9 | 6.7 | 0.8 | 0.2 | 0.2 | 1.2 | 0.2 |

The embodiments of the present invention have been described in detail above, but the present invention is not limited to the above embodiments at all, and various modifications can be made without departing from the gist of the present invention.

Industrial Applicability

The resin composition according to the present invention can be used for, e.g., an injection molding body, a pellet as a raw material for producing an injection molding body, and a masterbatch having a filler dispersed therein at a high concentration.

**Claims**

1. A resin composition comprising:

   an olefin-based thermoplastic resin and/or a thermoplastic elastomer,
   a biomass-derived filler, and
   a chemical adsorbent for chemically adsorbing a volatile organic compound (VOC) generated from the filler.

2. The resin composition according to claim 1, wherein the filler has an average particle diameter of 1 $\mu$m or more but 500 $\mu$m or less.

3. The resin composition according to claim 1 or 2, wherein the resin composition satisfies the following equation (1):

$$0 < X \le 60 \text{ mass}\% \qquad (1)$$

wherein X (mass%) is a mass ratio of the filler with respect to a total mass of the resin composition.

4. The resin composition according to claim 1 or 2, wherein the resin composition satisfies the following equation (2):

$$0.1 \le Y \le 15 \text{ mass}\% \qquad (2)$$

wherein Y (mass%) is a mass ratio of the chemical adsorbent with respect to a total mass of the resin composition.

5. An automotive member comprising the resin composition according to claim 1 or 2.

## INTERNATIONAL SEARCH REPORT

| International application No. |
| --- |
| **PCT/JP2023/001677** |

**A. CLASSIFICATION OF SUBJECT MATTER**

*C08L 23/00*(2006.01)i; *C08L 21/00*(2006.01)i
FI:  C08L23/00; C08L21/00

According to International Patent Classification (IPC) or to both national classification and IPC

**B. FIELDS SEARCHED**

Minimum documentation searched (classification system followed by classification symbols)

C08L1/00-101/14; C08K3/00-13/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2019-085547 A (HYUNDAI MOTOR COMPANY CO LTD) 06 June 2019 (2019-06-06) claims 1, 13, 15, 19-20, paragraphs [0002]-[0004], [0079], [0082], [0087], [0091]-[0102], table 1, examples 1-5 | 1-5 |
| X | JP 63-033446 A (NIPPON DENSO CO LTD) 13 February 1988 (1988-02-13) claim 1, p. 2, upper right column, line 8 to p. 2, lower left column, line 6, p. 3, lower right column, lines 17-19, p. 4, lower right column, line 8 to p. 5, upper left column, line 6, p. 5, lower column, table 1, example 1 | 1-5 |
| X | JP 2002-194231 A (SHOWA MARUTSUTSU CO LTD) 10 July 2002 (2002-07-10) claim 1, paragraphs [0004], [0014], [0041], example 1 | 1-5 |
| X | JP 2007-505167 A (NATIONAL RESEARCH COUNCIL OF CANADA) 08 March 2007 (2007-03-08) claim 1, paragraphs [0018], [0025]-[0044], tables 1-4, examples 2-3, 7-10 | 1-5 |
| X | JP 58-134137 A (SHOWA DENKO KK) 10 August 1983 (1983-08-10) claim 1, p. 2, lower right column, lines 18-20, p. 4, upper left column, lines 2-7, p. 5, upper left column, line 19 to p. 5, upper right column, line 19, example 1 | 1-5 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 March 2023** | **04 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
**Information on patent family members**

International application No.

**PCT/JP2023/001677**

| Patent document cited in search report | | | Publication date (day/month/year) | Patent family member(s) | Publication date (day/month/year) |
|---|---|---|---|---|---|
| JP | 2019-085547 | A | 06 June 2019 | US 2019/0127562 A1 claims 1, 13, 15, 19-20, paragraphs [0003]-[0005], [0076], [0079], [0084], [0088], table 1, examples 1-5 EP 3480249 A1 KR 10-2019-0049214 A CN 109749247 A | |
| JP | 63-033446 | A | 13 February 1988 | US 4833181 A claim 1, p. 1, column 1, lines 29-52, p. 2, column 3, line 67 to p. 2, column 4, line 3, p. 4, column 8, line 55 to p. 5, column 9, line 8, table 3, example 26 | |
| JP | 2002-194231 | A | 10 July 2002 | (Family: none) | |
| JP | 2007-505167 | A | 08 March 2007 | US 2005/0009960 A1 claim 1, paragraphs [0018], [0025]-[0046], tables 1-2, examples 2-3, 7-10 WO 2005/005531 A1 EP 1646685 A1 KR 10-2006-0083131 A CN 1823129 A | |
| JP | 58-134137 | A | 10 August 1983 | (Family: none) | |

Form PCT/ISA/210 (patent family annex) (January 2015)

**EP 4 516 851 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021050270 A